# EUROPÄISCHE PATENTSCHRIFT

(11) **EP 2 117 890 B1**
(45) Veröffentlichungstag und Bekanntmachung des Hinweises auf die Patenterteilung: **16.03.2011**
(21) Anmeldenummer: 07847989.6
(22) Anmeldetag: 07.12.2007
(51) Int. Cl.: B60S 1/08, H02K 7/116, H02K 11/02

(54) **ELEKTRISCHER ANTRIEB**
ELECTRIC DRIVE
ENTRAÎNEMENT ÉLECTRIQUE

(30) Priorität: 05.02.2007 DE 102007005572
(43) Veröffentlichungstag der Anmeldung: 18.11.2009
(73) Patentinhaber: Robert Bosch GmbH, 70442 Stuttgart (DE)
(72) Erfinder: HURST, Richard, 77652 Offenburg (DE); HEYDER, Martin, 77833 Ottersweier (DE); KOESTERS, Matthias, 78185 Karlsruhe (DE); MARTIN, Norbert, 77855 Achern (DE)
(86) Internationale Anmeldenummer: PCT/EP2007/063540
(87) Internationale Veröffentlichungsnummer: WO 2008/095564

(56) Entgegenhaltungen:
- EP-A- 0 554 171
- WO-A-91/03856
- DE-A1-102004 041 485
- GB-A- 2 044 552

## Beschreibung

### Stand der Technik

Die Erfindung geht aus von einem elektrischen Antrieb nach der Gattung des unabhängigen Anspruchs 1, wie er beispielsweise aus der DE 39 30 144 A1 bekannt ist. Diese Druckschrift offenbart einen elektrischen Kleinmotor zum Antrieb von Scheibenwischern in Kraftfahrzeugen, welcher ein in einer Tasche des Getriebetopfes angeordnetes Entstörmodul aufweist, das gleichzeitig die Funktion eines elektrischen Anschlussteils von den Bürsten des Elektromotors zu den Außenanschlüssen übernimmt. Die Bürstenanordnung des Motors sitzt hierbei auf einer Platte, welche das in das Getriebegehäuse hineinragende Entstörmodul trägt, das seinerseits jeweils individuell entsprechend der Bauform und der Ausrichtung des Getriebegehäuses gestaltet sein muss. Ein derartiger Aufbau des elektrischen Antriebs ist aufwendig, insbesondere hinsichtlich der benötigten Werkzeugvielfalt und der hierdurch bedingten Werkzeugkosten.

### Offenbarung der Erfindung

Der erfindungsgemäße elektrische Antrieb mit den Merkmalen des unabhängigen Anspruchs hat demgegenüber den Vorteil, dass die Werkzeugvielfalt und die Werkzeugkosten durch Verwendung einer identischen Baugruppe aus Bürstenträger und Entstörmodul für unterschiedliche Getriebelagen deutlich reduziert werden kann.

Durch die in den abhängigen Ansprüchen aufgeführten Maßnahmen sind vorteilhafte Weiterbildungen und Verbesserungen der im unabhängigen Anspruch angegebenen Bauform möglich.

Besonders zweckmäßig ist es hierbei, wenn die Haltemittel am Entstörmodul und am Bürstenträger als Nut- und Feder-Verbindung gestaltet sind, weil derartige Haltemittel in ihrem Zusammenwirken sehr sicher und gleichzeitig leicht herstellbar sind, wodurch die Werkzeugkosten beachtlich verringert werden können. Vorzugsweise sind dabei gleichartige Federvorsprünge an gegenüberliegenden Seiten einer Aussparung am Bürstenträger und spiegelbildlich dazu angeordnete Nuten am Entstörmodul ausgebildet, weil am Bürstenträger verlaufende Führungsrippen leicht anformbar sind und an dem als Einschubteil ausgebildeten Entstörmodul dann nur zugehörige nutartigen Einkerbungen vorgesehen werden müssen.

Innerhalb des Entstörmoduls sind vorzugsweise zwei baugleiche Entstördrosseln auf gleicher Höhe spiegelsymmetrisch zueinander angeordnet und innerhalb des Entstörmoduls arretiert, so dass auch hinsichtlich der elektrischen Bauteile des Entstörmoduls eine weitere Reduzierung der Bauteilvielfalt gegeben ist. Entsprechend können gegebenenfalls auch einer oder mehrere Entstörkondensatoren zusätzlich in dem Entstörmodul untergebracht werden.

Weitere Ausgestaltungen und Einzelheiten der Erfindung ergeben sich aus den Unteransprüchen und einer anschließend erörterten Ausführungsform der Erfindung.

### Kurze Beschreibung der Zeichnungen

Ein Ausführungsbeispiel der Erfindung ist in den Zeichnungen dargestellt und in der nachfolgenden Beschreibung näher erläutert.

Es zeigen
- Figuren 1a und 1b: perspektivische Darstellungen eines Bürstenträgers für einen elektrischen Antriebsmotor mit zwei baugleichen, in verschiedenen Einbaulagen montierbaren Entstörmodulen,
- Figur 2a: eine perspektivische Explosionsdarstellung eines elektrischen Antriebs mit einem in der Darstellung von der Motorwelle nach rechts ausgerichteten Getriebeanbau und
- Figur 2b: eine perspektivische Explosionsdarstellung eines elektrischen Antriebs mit einem in der Darstellung von der Motorwelle nach links ausgerichteten Getriebeanbau.

### Ausführungsformen der Erfindung

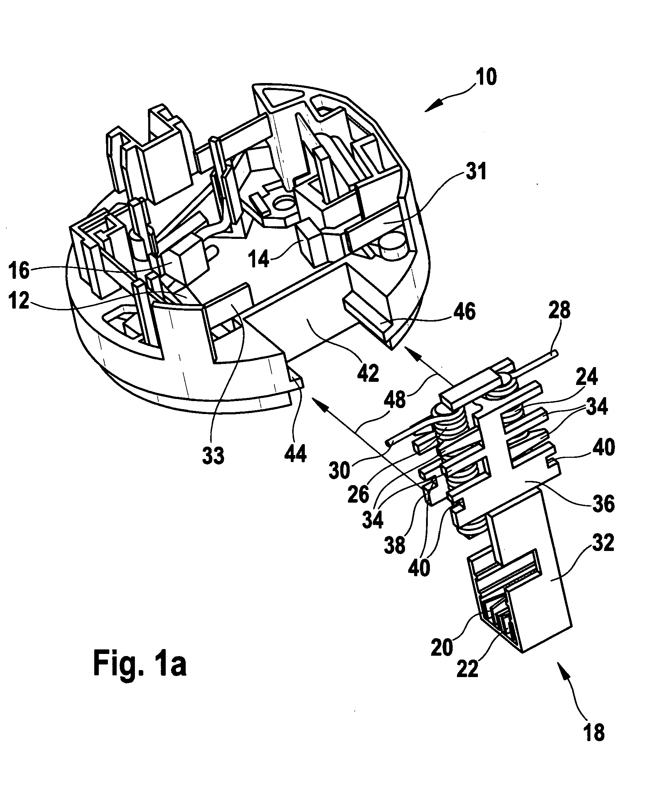

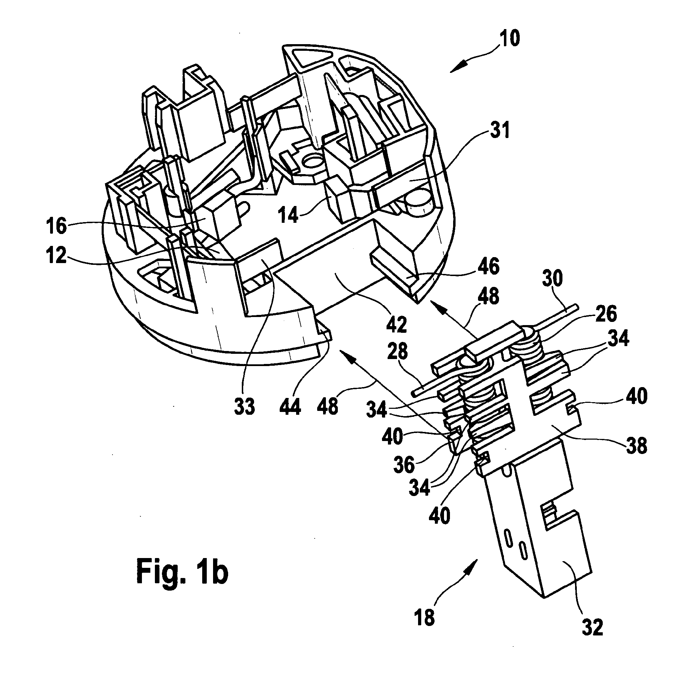

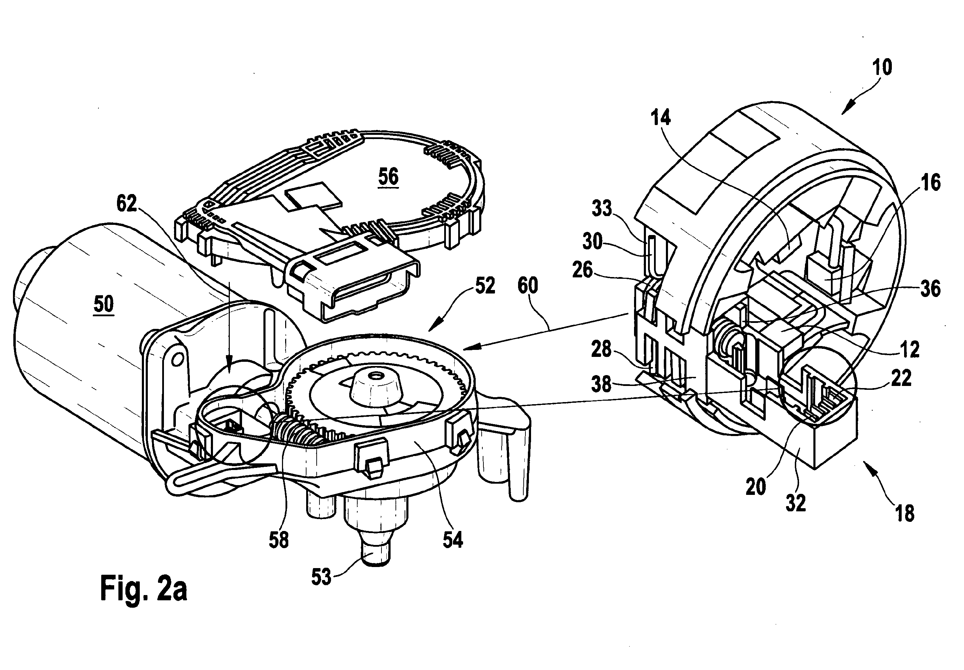

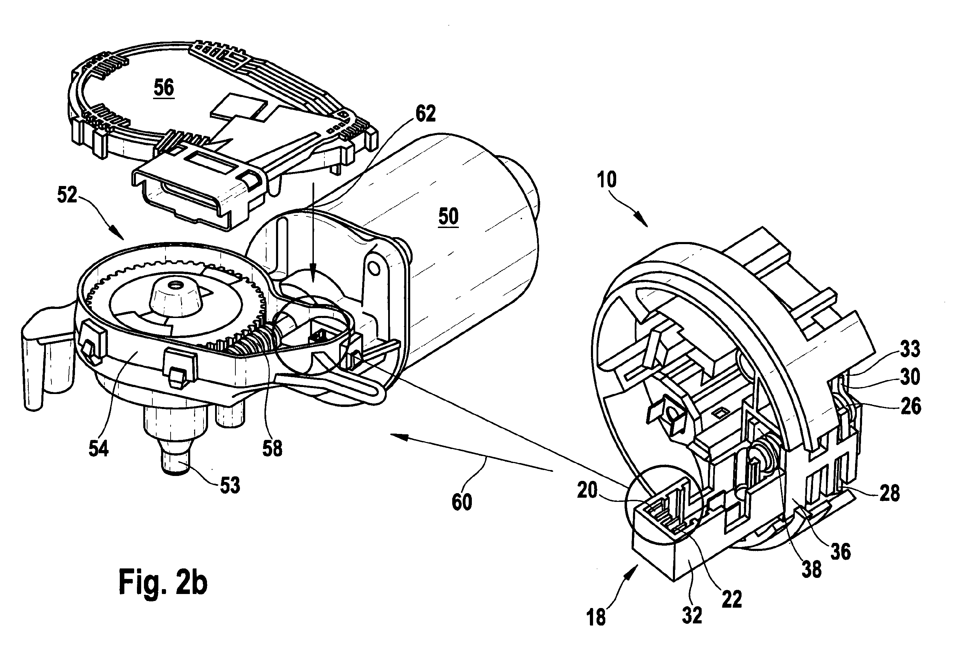

In den Figuren 1a und 1b ist mit 10 ein Bürstenträger für einen elektrischen Antriebsmotor einer Scheibenwischeranlage bezeichnet, die vollständige Anordnung des Antriebes wird anschließend anhand der Figuren 2a und 2b näher erläutert. In dem Bürstenträger sind Bürsten 12, 14 und 16 gehalten, wobei die gegenüberliegenden Bürsten 12 und 14 den Motor bei einer niedrigeren Drehzahl und die Bürsten 14 und 16 bei einer höheren Drehzahl speisen. Unterhalb des Bürstenträgers 10 sind zwei identische Entstörmodule 18 dargestellt, welche mechanisch und elektrisch mit dem Bürstenträger 10 verbunden werden zum elektrischen Anschluss und für die Funkentstörung des Motors. Für unterschiedliche Getriebelagen des elektrischen Antriebs kann das baugleiche Entstörmodul hierbei am Bürstenträger 10 in zwei um 180° gedrehten Einbaulagen montiert werden, so dass für zwei verschiedene Antriebe das gleiche Entstörmodul mit dem gleichen Bürstenträger eingesetzt werden kann.

Für die elektrische Verbindung des Entstörmoduls 18 mit äußeren elektrischen Anschlüssen besitzt es klemmenförmige Steckkontakte 20 und 22, welche je nach Einbaulage in entgegengesetzte Richtungen weisen entsprechend der jeweiligen Getriebelage. Als Entstörelemente sind in den Figuren 1a und 1b zwei identische Entstördrosseln 24 und 26, um 180° gegeneinander versetzt, in das Entstörmodul 18 eingefügt, so dass die Drahtenden 28 und 30 für den Anschluss der Drosseln in entgegengesetzte Richtungen weisen. Die Drahtenden 28, 30 werden mit Anschlussblechen 31,33 der Bürstenanordnung verbunden. Die Steckkontakte 20, 22 sowie die Entstördrosseln 24, 26 sind dabei in einem als Gehäuse des Entstörmoduls 18 dienenden Kunststoffspritzteil 32 angeordnet, wobei die Steckkontakte 20 und 22 am unteren Ende des Kunststoffspritzteils eingefügt sind, während die Entstördrosseln 24 und 26 durch fingerförmige Vorsprünge 34 in ihrer jeweiligen Position gehalten werden.

Zur Befestigung des Entstörmoduls 18 am oder im Bürstenträger 10 weist das Kunststoffspritzteil beidseitig der Entstördrosseln 24, 26, nach beiden Seiten herausragend, weitere Vorsprünge 36 und 38 auf, in welche Nuten 40 mit gleicher Lage und Größe eingearbeitet sind, die beim Einschub in eine rechteckförmige Aussparung 42 am Bürstenträger 10 in Verbindung mit dort seitlich als Feder angebrachten Rippen 44 und 46 die korrespondierenden Haltemittel für das Entstörmodul 18 am Bürstenträger 10 bilden. Die Fügerichtung des Entstörmoduls 18 ist durch die Pfeile 48 dargestellt.

Die Figuren 2a und 2b zeigen in perspektivischer Explosionsdarstellung den Zusammenbau des elektrischen Antriebs in zwei um 180° gegeneinander verdrehten Einbaulagen eines an einem Motorgehäuse 50 angebauten Getriebes 52, wobei gleiche Teile mit gleichen Bezugszeichen versehen sind wie in Figur 1.

In den Figuren 2a und 2b sind deutlich die um 180° gedrehten Getriebelagen des elektrischen Antriebs sichtbar. Hierbei ist das Getriebegehäuse 54 mit der Abtriebswelle 53 in der Figur 2a gegenüber der Motorwelle 58 und der aus dem Motorgehäuse 50 herausragenden Antriebsschnecke nach rechts ausgerichtet, in der Figur 2b dagegen nach links. Derartige unterschiedliche Getriebelagen sind beispielsweise bei Scheibenwischerantrieben für Fahrzeuge für die Scheibenwischer auf der rechten und der linken Fahrzeugseite erforderlich, wobei erfindungsgemäß die gleiche Baugruppe aus Bürstenträger 10 und Entstörmodul 18 für beide Einbaulagen verwendbar ist. Lediglich das Getriebe 52 mit dem Getriebegehäuse 54 und dem Getriebedeckel 56 müssen für die unterschiedlichen Einbaulagen separat gestaltet werden.

Die Fügerichtungen für den Bürstenträger 10 und den Getriebedeckel 56 sind in den Figuren 2a und 2b durch Pfeile 60 und 62 angegeben. Die Steckkontakte 20 und 22 weisen dabei jeweils zur offenen Seite des Getriebegehäuses 54 und sind dann durch entsprechende Kontakte am Getriebedeckel 56 durch äußere Anschlüsse für die Spannungsversorgung des Motors kontaktierbar. Der motorische Teil des Antriebs besteht aus identischen Bauteilen für beide Getriebelagen, seine Varianz liegt ausschließlich in der spiegelbildlichen Fügeposition des Entstörmoduls 18 im Bürstenträger 10.

## Patentansprüche

1. Elektrischer Antrieb, insbesondere Scheibenwischerantrieb für Fahrzeuge, mit einem elektrischen Motor in einem Motorgehäuse (50), einem in das Motorgehäuse (50) hineinragenden Bürstenträger (10), einem mit dem Bürstenträger (10) elektrisch und mechanisch verbundenen Entstörmodul (18) zum elektrischen Anschluss und zur Funkentstörung des Motors, sowie mit einem an das Motorgehäuse (50) angebauten, das Entstörmodul (18) teilweise aufnehmenden Getriebe (52), welches entsprechend der vorgegebenen Lage einer Abtriebswelle (53) zur Antriebswelle (58) des Motors gestaltet ist, **dadurch gekennzeichnet, dass** das Entstörmodul (18) und der Bürstenträger (10) mit korrespondierenden Haltemitteln (40,44) ausgestattet sind, welche die Montage eines baugleichen Entstörmoduls (18) am Bürstenträger (10) in zwei um 180° gedrehten Einbaulagen gestatten.

2. Elektrischer Antrieb nach Anspruch 1, **dadurch gekennzeichnet, dass** die Haltemittel am Entstörmodul (18) und am Bürstenträger (10) als Nut(40)- und Feder(44)-Verbindung gestaltet sind.

3. Elektrischer Antrieb nach Anspruch 1 oder 2, **dadurch gekennzeichnet, dass** die Haltemittel Federvorsprünge (44) am Bürstenträger (10) und spiegelsymmetrisch angeordnete Nuten (40) am Entstörmodul (18) aufweisen.

4. Elektrischer Antrieb nach einem der vorhergehenden Ansprüche, **dadurch gekennzeichnet, dass** der Bürstenträger (10) eine rechteckförmige Aussparung (42) mit spiegelsymmetrisch und parallel verlaufenden Federvorsprüngen (44) an seinen Seitenwänden aufweist.

5. Elektrischer Antrieb nach einem der vorhergehenden Ansprüche, **dadurch gekennzeichnet, dass** zwei baugleiche Entstördrosseln (24,26) spiegelsymmetrisch nebeneinander in dem Entstörmodul (18) angeordnet sind.

## Claims

1. Electrical drive, in particular a screen wiper drive for vehicles, having an electric motor in a motor housing (50), having a brush holder (10) which projects into the motor housing (50), having a suppression module (18), which is electrically and mechanically connected to the brush holder (10), for electrical connection and for radio suppression of the motor, and having a gearbox (52), which is fitted to the motor housing (50), partially holds the suppression module (18) and is designed to correspond to the predetermined position of an output-drive shaft (53) with respect to the input drive shaft (58) of the motor, **characterized in that** the suppression module (18) and the brush holder (10) are equipped with corresponding holding pins (40, 44) which allow a physically identical suppression module (18) to be fitted to the brush holder (10) in two installation positions rotated through 180°.

2. Electrical drive according to Claim 1, **characterized in that** the holding means on the suppression module (18) and on the brush holder (10) are in the form of a tongue (44) and groove (40) connection.

3. Electrical drive according to Claim 1 or 2, **characterized in that** the holding means have spring projections (44) on the brush holder (10) and slots (40), which are arranged with mirror-image symmetry, on the suppression module (18).

4. Electrical drive according to one of the preceding claims, **characterized in that** the brush holder (10) has a rectangular cutout (42) with spring projections (44) which run with mirror-image symmetry and parallel to its side walls.

5. Electrical drive according to one of the preceding claims, **characterized in that** two physically identical suppression inductors (24, 26) are arranged with mirror-image symmetry alongside one another in the suppression module (18).

## Revendications

1. Entraînement électrique, notamment entraînement d'essuie-glace pour véhicules, comprenant un moteur électrique dans un carter de moteur (50), un support porte-balais (10) pénétrant dans le carter de moteur (50), un module antiparasite (18) connecté électriquement et mécaniquement au support porte-balais (10) pour le raccordement électrique et pour l'antiparasitage du moteur, ainsi qu'une transmission (52) montée sur le carter de moteur (50), recevant en partie le module antiparasite (18), qui est configurée en fonction de la position prédéfinie d'un arbre de prise de force (53) par rapport à l'arbre d'entraînement (58) du moteur, **caractérisé en ce que** le module antiparasite (18) et le support porte-balais (10) sont munis de moyens de retenue correspondants (40, 44) qui permettent le montage d'un module antiparasite de même construction (18) sur le support porte-balais (10) dans deux positions d'installation tournées de 180°.

2. Entraînement électrique selon la revendication 1, **caractérisé en ce que** les moyens de retenue sur le module antiparasite (18) et sur le support porte-balais (10) sont configurés en tant que connexion à rainure (40) et languette (44).

3. Entraînement électrique selon la revendication 1 ou 2, **caractérisé en ce que** les moyens de retenue présentent des saillies à ressort (44) sur le support porte-balais (10) et des rainures (40) disposées avec une symétrie spéculaire sur le module antiparasite (18).

4. Entraînement électrique selon l'une quelconque des revendications précédentes, **caractérisé en ce que** le support porte-balais (10) présente un évidement de forme rectangulaire (42) avec des saillies à ressort (44) s'étendant avec une symétrie spéculaire et parallèlement, sur ses parois latérales.

5. Entraînement électrique selon l'une quelconque des revendications précédentes, **caractérisé en ce que** deux étranglements antiparasites (24, 26) sont disposés avec une symétrie spéculaire l'un à côté de l'autre dans le module antiparasite (18).
